# EUROPEAN PATENT APPLICATION

(11) **EP 4 447 510 A1**
(43) Date of publication of application: **16.10.2024**
(21) Application number: 22923629.4
(22) Date of filing: 28.12.2022
(51) Int. Cl.: H04W 8/26

(54) **AID ALLOCATION METHOD, APPARATUS AND SYSTEM**

(30) Priority: 25.01.2022 CN 202210087389
(71) Applicant: Huawei Technologies Co., Ltd., Shenzhen, Guangdong 518129 (CN)
(72) Inventor: LI, Miao, Shenzhen, Guangdong 518129 (CN); WANG, Xiang, Shenzhen, Guangdong 518129 (CN); GAN, Shuang, Shenzhen, Guangdong 518129 (CN)
(74) Representative: MERH-IP Matias Erny Reichl Hoffmann Patentanwälte PartG mbB
(86) International application number: PCT/CN2022/142729
(87) International publication number: WO 2023/142844

(57) **Abstract**

This application provides a method, an apparatus, and a system for allocating an AID, and belongs to the field of network communication technologies. The method includes: A management device obtains a parameter of a STA. The management device allocates an AID to the STA based on the parameter of the STA, and determines a first AP from a plurality of APs managed by the management device, where the first AP is configured to send the AID to the STA, BSSIDs of the plurality of APs are the same, at least one of the plurality of APs receives an authentication request sent by the STA, and the first AP belongs to the at least one AP. The management device sends the AID and an identifier of the STA to the first AP. According to the solution in this application, different STAs may correspond to different AIDs, so that when the STA sends, to the AP, a message that carries the AID but does not carry a source MAC address, the AP can distinguish between the STAs.

## Description

This application claims priority to Chinese Patent Application No. 202210087389.2, filed with the China National Intellectual Property Administration on January 25, 2022 and entitled "METHOD, APPARATUS, AND SYSTEM FOR ALLOCATING AID", which is incorporated herein by reference in its entirety.

### TECHNICAL FIELD

This application relates to the field of network communication technologies, and in particular, to a method, an apparatus, and a system for allocating an AID.

### BACKGROUND

In a wireless local area network (wireless local area network, WLAN), when a station (station, STA) accesses the WLAN, an access point (access point, AP) allocates one association identifier (association identifier, AID) to the STA. The AID is for identifying that a correspondence has been established between the STA and the AP, and the STA may communicate with the AP. Usually, when the AP allocates AIDs to STAs, the AIDs are allocated to the STAs in ascending order starting from 1.

In conventional networking, a basic service set identifier (basic service set identifier, BSSID) of each AP is independent, and each AP manages an AID of a STA associated with the AP. Because the AID allocated by the AP to the STA associated with the AP is unique, in a network architecture identified by one BSSID, the AID may alternatively replace a media access control (media access control, MAC) address in some messages to identify the STA. For example, scheduling information of a corresponding STA is distinguished by using the AID.

However, with development of communication technologies, a network architecture in which a plurality of APs share one BSSID emerges. If the AID is still allocated in a conventional allocation manner (where for example, in the network architecture, each of the plurality of APs allocates an AID to a STA that accesses the AP), two APs may allocate a same AID to different STAs. In this case, because the STAs with the same AID exist in the network architecture identified by one BSSID, when the STA sends, to the AP, a message that carries the AID but does not carry a source MAC address, the AP cannot distinguish between the STAs.

### SUMMARY

This application provides a method, an apparatus, a system, a device, and a storage medium for allocating an AID, to resolve a problem that an AP cannot distinguish between STAs in a network architecture identified by one BSSID.

According to a first aspect, this application provides a method for allocating an AID. The method is performed by a management device, and the method includes:

The management device obtains a parameter of a STA. The management device allocates an AID to the STAbased on the parameter of the STA, and determines a first AP from a plurality of APs managed by the management device, where the first AP is configured to send the AID to the STA, BSSIDs of the plurality of APs are the same, at least one of the plurality of APs receives an authentication request sent by the STA, and the first AP belongs to the at least one AP. The management device sends the AID and an identifier of the STA to the first AP.

In the solution shown in this application, the management device allocates the AID to the STA by using the parameter of the STA. The management device determines the first AP that sends the AID to the STA, and the management device sends the AID and the identifier of the STA to the first AP, so that the first AP sends the AID to the STA. In this way, in a network architecture in which the plurality of APs share one BSSID, the management device uniformly allocates the AID to the STA, so that AIDs allocated to STAs in the network architecture are different. Therefore, when the STA sends, to the AP, a message that carries the AID but does not carry a source MAC address, the AID may also be used to distinguish between the STAs.

In a possible implementation, the method further includes: The management device sends the AID and the identifier of the STA to another AP than the first AP in the plurality of APs. In this way, because the another AP also records that the AID corresponds to the STA, after the STA roams to the another AP, authentication and association do not need to be performed again. This can save network access duration.

In a possible implementation, the method further includes: The management device detects that the STA is offline. The management device separately sends a recycling message to the plurality of APs, where the recycling message indicates to recycle the AID.

In the solution shown in this application, after the STA is offline, the management device may notify each AP to recycle the AID corresponding to the STA, so that the AID may be subsequently allocated to another STA, thereby saving an AID resource.

In a possible implementation, the plurality of APs and the management device form a fiber to the room (fiber to the room, FTTR) network architecture, the management device includes the AID and the identifier of the STA in an allocation message, the AID and the identifier of the STA are located in a payload field of the allocation message, and a destination address of the allocation message is an identifier of an AP that receives the allocation message. An identifier of each AP is for uniquely identifying the AP.

In a possible implementation, the plurality of APs and the management device form an Ethernet architecture, the management device includes the AID and the identifier of the STA in an Ethernet frame, and the AID and the identifier of the STA are located in a payload field of the Ethernet frame.

In a possible implementation, the plurality of APs and the management device form a passive optical network (passive optical network, PON) architecture, the management device includes the AID and the identifier of the STA in an optical network unit management and control interface (ONU management and control interface, OMCI) message, and the AID and the identifier of the STA are located in a message content field of the OMCI message.

In a possible implementation, that the management device obtains a parameter of a STA includes: The management device receives an authentication report message sent by the at least one of the plurality of APs, where the authentication report message includes the parameter of the STA. The management device obtains the parameter of the STA from the authentication report message. In this way, the management device may obtain the parameter of the STA from the authentication report message.

In a possible implementation, the method further includes: The management device obtains characteristic information of the at least one AP, where characteristic information of each AP includes at least one of load information, information about encountered interference, and quality information of a received signal sent by the STA. The determining a first AP from a plurality of APs managed by the management device includes: The management device determines, based on the characteristic information of the at least one AP, quality of a connection between the at least one AP and the STA, and determines an AP with highest connection quality in the at least one AP as the first AP.

In the solution shown in this application, the management device determines, from the at least one AP by using the characteristic information of the at least one AP, the AP with the highest connection quality as an AP to be associated with the STA. In this way, the at least one AP is an AP that sends the authentication report message to the management device. In other words, the at least one AP is an AP that receives the authentication request sent by the STA. In this case, each AP in the at least one AP can communicate with the STA, and the AP with the highest connection quality is selected from these APs, so that the selected AP can communicate with the STA.

In a possible implementation, the method further includes: The management device detects that the STA moves from a coverage area of the first AP to a coverage area of a second AP in the plurality of APs. The management device sends a notification message to the second AP, where the notification message indicates the second AP to connect to the STA. In this way, after the STA roams to the coverage area of the second AP, the management device may notify the second AP to provide a packet forwarding function for the STA, so that the STA does not perceive AP handover.

According to a second aspect, this application provides a method for allocating an AID. The method is performed by a first AP, and the method includes:

The first AP receives an AID and an identifier of a STA that are sent by a management device, where the AID is an AID allocated by the management device to the STA. The first AP stores the identifier of the STA and the AID in a corresponding manner.

In the solution shown in this application, in a network architecture in which a plurality of APs share one BSSID, the management device uniformly allocates the AID to the STA, so that AIDs allocated to STAs in the network architecture are different. Therefore, when the STA sends, to the AP, a message that carries the AID but does not carry a source MAC address, the AID may also be used to distinguish between the STAs.

In a possible implementation, the method further includes: When the first AP is an AP that is associated with the STA and that is specified by the management device, the first AP sends the AID to the STA. In this way, the AP specified by the management device sends the AID to the STA, so that the STA can obtain the AID corresponding to the AP, and does not repeatedly receive the AID.

In a possible implementation, before the first AP receives an AID and an identifier of a STA that are sent by a management device, the method further includes: The first AP receives an authentication request sent by the STA, where the authentication request includes a parameter of the STA. The first AP sends an authentication report message to the management device, where the authentication report message includes the parameter of the STA. After the first AP receives an AID and an identifier of a STA that are sent by a management device, the method further includes: When the first AP is the AP that is associated with the STA and that is specified by the management device, the first AP sends an authentication response message to the STA.

In the solution shown in this application, after receiving the authentication request sent by the STA, the first AP reports the authentication request to the management device, so that the management device allocates the AID to the STA, and sends the authentication response message to the STA when the first AP is specified as the AP associated with the STA. In this way, the STA can continue to perform a network access process. In addition, only the AP associated with the STA sends the authentication response message to the STA, so that the STA does not repeatedly receive the authentication response message.

In a possible implementation, the method further includes: The first AP receives a recycling message sent by the management device, where the recycling message indicates to recycle the AID. The first AP recycles the AID.

In the solution shown in this application, after receiving the AID recycling message, the first AP recycles the AID, so that the AID can be further allocated to another STA, thereby saving an AID resource.

According to a third aspect, this application provides an apparatus for allocating an AID. The apparatus has a function of implementing any one of the first aspect or the optional implementations of the first aspect. The apparatus includes at least one module, and the at least one module is configured to implement the method that is for allocating an AID and that is provided in any one of the first aspect or the optional implementations of the first aspect.

According to a fourth aspect, this application provides an apparatus for allocating an AID. The apparatus has a function of implementing any one of the second aspect or the optional implementations of the second aspect. The apparatus includes at least one module, and the at least one module is configured to implement the method that is for allocating an AID and that is provided in any one of the second aspect or the optional implementations of the second aspect.

According to a fifth aspect, this application provides a management device. The management device includes a network interface, a memory, and a processor connected to the memory.

The network interface is configured to: obtain a parameter of a STA, and send an identifier of the STA and an AID to a first AP.

The memory is configured to store computer instructions.

The processor is configured to execute the computer instructions, to enable the management device to implement the method that is for allocating an AID and that is provided in any one of the first aspect or the optional implementations of the first aspect.

According to a sixth aspect, this application provides an AP. The AP includes a network interface, a memory, and a processor connected to the memory.

The network interface is configured to receive an identifier of a STA and an AID that are sent by a management device.

The memory is configured to store computer instructions.

The processor is configured to execute the computer instructions, to enable the AP to implement the method that is for allocating an AID and that is provided in any one of the second aspect or the optional implementations of the second aspect.

According to a seventh aspect, this application provides a computer-readable storage medium. The storage medium stores at least one computer instruction, where the computer instruction is read by a processor, to enable a management device to perform the method that is for allocating an AID and that is provided in any one of the first aspect or the optional implementations of the first aspect.

According to an eighth aspect, this application provides a computer-readable storage medium. The storage medium stores at least one computer instruction, where the computer instruction is read by a processor, to enable an AP to perform the method that is for allocating an AID and that is provided in any one of the second aspect or the optional implementations of the second aspect.

According to a ninth aspect, this application provides a computer program product. The computer program product includes computer instructions, where the computer instructions are stored in a computer-readable storage medium. A processor of a management device reads the computer instructions from the computer-readable storage medium, and the processor executes the computer instructions, to enable the management device to perform the method that is for allocating an AID and that is provided in any one of the first aspect or the optional implementations of the first aspect.

According to a tenth aspect, this application provides a computer program product. The computer program product includes computer instructions, where the computer instructions are stored in a computer-readable storage medium. A processor of an AP reads the computer instructions from the computer-readable storage medium, and the processor executes the computer instructions, to enable the AP to perform the method that is for allocating an AID and that is provided in any one of the second aspect or the optional implementations of the second aspect.

According to an eleventh aspect, this application provides a system for allocating an AID. The system includes a management device and an AP. The management device is configured to perform the method that is for allocating an AID and that is provided in any one of the first aspect or the optional implementations of the first aspect. The AP is configured to perform the method that is for allocating an AID and that is provided in any one of the second aspect or the optional implementations of the second aspect.

### BRIEF DESCRIPTION OF DRAWINGS

FIG. 1 is a schematic diagram of conventional networking according to an example embodiment of this application;
FIG. 2 is a schematic diagram in which a plurality of APs share one BSSID according to an example embodiment of this application;
FIG. 3 is a schematic diagram of an architecture of a system for allocating an AID according to an example embodiment of this application;
FIG. 4 is a schematic diagram of a structure of a device according to an example embodiment of this application;
FIG. 5 is a schematic diagram of a structure of an AP according to an example embodiment of this application;
FIG. 6 is a schematic flowchart of a method for allocating an AID according to an example embodiment of this application;
FIG. 7 is a schematic flowchart of a method for allocating an AID according to an example embodiment of this application;
FIG. 8 is a schematic flowchart of a method for allocating an AID according to an example embodiment of this application;
FIG. 9 is a schematic diagram of an AID allocation field according to an example embodiment of this application;
FIG. 10 is a schematic diagram of an AID allocation field according to an example embodiment of this application;
FIG. 11 is a schematic diagram of an allocation message according to an example embodiment of this application;
FIG. 12 is a schematic diagram of an Ethernet frame according to an example embodiment of this application;
FIG. 13 is a schematic diagram of an OMCI message according to an example embodiment of this application;
FIG. 14 is a schematic diagram of STA roaming according to an example embodiment of this application;
FIG. 15 is a schematic flowchart of recycling an AID according to an example embodiment of this application;
FIG. 16 is a schematic diagram of an AID allocation field and an AID recycling field according to an example embodiment of this application;
FIG. 17 is a schematic diagram of a recycling message according to an example embodiment of this application;
FIG. 18 is a schematic diagram of a structure of an apparatus for allocating an AID according to an example embodiment of this application; and
FIG. 19 is a schematic diagram of a structure of an apparatus for allocating an AID according to an example embodiment of this application.

### DESCRIPTION OF EMBODIMENTS

To make objectives, technical solutions, and advantages of this application clearer, the following further describes implementations of this application in detail with reference to the accompanying drawings.

The following describes the solutions of a conventional technology.

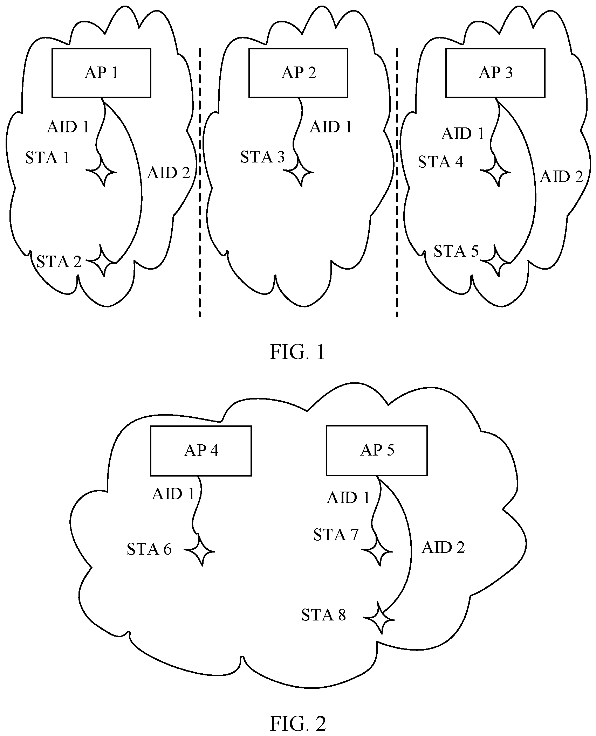

In the conventional technology, in conventional networking, each BSSID identifies one network architecture, each network architecture includes one AP, and each AP in each network architecture manages an AID of a STA associated with the AP. Because the AID allocated by the AP to the STA associated with the AP is unique, in a network architecture identified by one BSSID, the AID may alternatively replace a MAC address in some messages to identify the STA. For example, as shown in FIG. 1, three network architectures respectively include an AP 1, an AP 2, and an AP 3. The AP 1 allocates an AID 1 to a STA 1, the AP 1 allocates an AID 2 to a STA 2, the AP 2 allocates the AID 1 to a STA 3, the AP 3 allocates the AID 1 to a STA 4, and the AP 3 allocates the AID 2 to a STA 5. Because BSSIDs of the AP 1 and the AP 2 are different, even if messages sent by the STA 1 and the STA 3 carry only the AID 1, confusion does not occur.

However, with development of communication technologies, a network architecture in which a plurality of APs share one BSSID emerges. If in the network architecture, each of the plurality of APs allocates an AID to a STA that accesses the AP, two APs may allocate a same AID to different STAs. In this case, because the STAs with the same AID exist in the network architecture identified by one BSSID, when the STA sends, to the AP, a message that carries the AID but does not carry a source MAC address, the AP cannot distinguish between the STAs, and when the AP sends a message that carries the AID to a STA associated with the AP, confusion occurs on a STA side. For example, as shown in FIG. 2, an AP 4 and an AP 5 are included in a network architecture. The AP 4 allocates the AID 1 to a STA 6, the AP 5 allocates the AID 1 to a STA 7, and the AP 5 allocates the AID 2 to a STA 8. In a network architecture identified by one BSSID, MAC addresses of the APs are the same. Therefore, when the STA 6 sends a message that carries the AID 1 but does not carry a source MAC address, and when both the AP 4 and the AP 5 receive the message, the AP 4 and the AP 5 cannot determine whether the message belongs to the STA 6 or the STA 7. The AP 4 sends a beacon (beacon) frame to indicate that the STA 6 of the AID 1 has to-be-transmitted data, and the STA 6 is to be woken up from sleep. In addition, the STA 7 mistakenly considers that the STA 7 also has to-be-transmitted data, and is also woken up from sleep. This affects energy-saving efficiency.

In this application, in a network architecture in which a plurality of APs share one B SSID, a management device uniformly allocates an AID to a STA, so that AIDs allocated to STAs in the network architecture are different. Therefore, when the STA sends, to the AP, a message that carries the AID but does not carry a source MAC address, the AID may also be used to distinguish between the STAs.

The following describes the technical solutions provided in embodiments of this application in detail from a plurality of perspectives in a sequence of a system for allocating an AID, hardware structures of various devices in the system, and a method for allocating an AID.

The following describes the system that is for allocating an AID and that is provided in embodiments of this application.

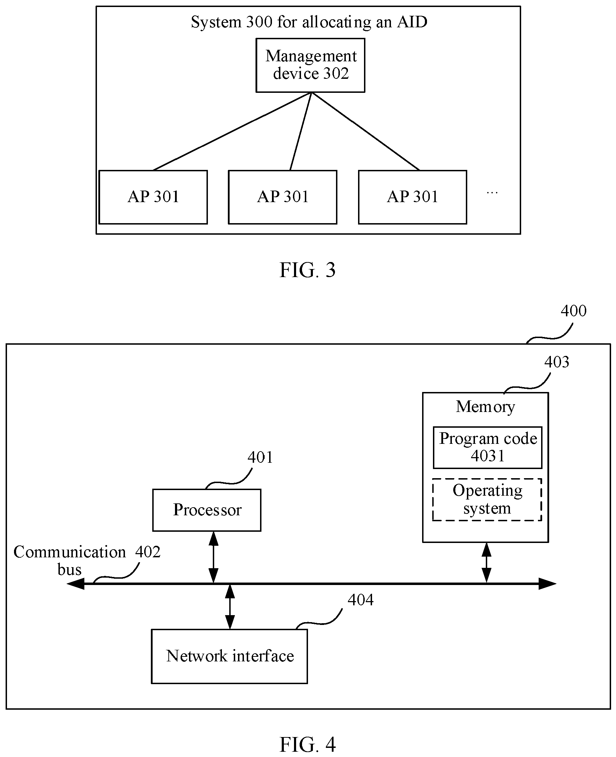

Refer to FIG. 3. An embodiment of this application provides a system 300 for allocating an AID. The system 300 includes a plurality of APs 301 and a management device 302. One network architecture includes the plurality of APs 301. In the network architecture, BSSIDs of the APs 301 are the same, MAC addresses of the APs 301 are the same, and coverage areas of two adjacent APs 301 may overlap or may not overlap. For example, the AP 301 may be a router, a switch, an optical anchor. The management device 302 is configured to allocate an AID. The management device 302 may be an AP in the network architecture, where the AP is referred to as a central AP, for example, an AP with a highest capability in the network architecture, or may be an access controller that is responsible for managing the plurality of APs 301. A quantity and types of APs are not limited in this embodiment of this application.

The management device 302 can communicate with each AP 301, for example, communicate through an optical fiber, communicate through a cable, or communicate in a wireless manner. In an implementation, the management device 302 and the plurality of APs 301 form an FTTR network architecture. The management device 302 is an optical gateway, and the plurality of APs 301 are edge APs, where the edge AP is configured to be accessed by a STA, and the optical gateway and the edge AP are connected through the optical fiber, connected in the wireless manner, or connected through the cable. In another implementation, the management device 302 and the plurality of APs 301 form an Ethernet architecture. In another implementation, the management device 302 and the plurality of APs 301 form a PON architecture, and the management device 302 and the plurality of APs 301 are connected through optical fibers. That the management device 302 and the plurality of APs 301 form a PON architecture is described herein to indicate that the network architecture between the management device 302 and the plurality of APs 301 is similar to a PON.

The foregoing describes a system architecture provided in embodiments of this application, and the following describes a hardware structure of a device in the foregoing system architecture.

Refer to FIG. 4. A device 400 shown in FIG. 4 is an example for describing the AP 301 and the management device 302 in the foregoing system architecture. Optionally, the device 400 is configured as the AP 301, the management device 302, or the like.

The device 400 is optionally implemented by a general bus architecture. The device 400 includes at least one processor 401, a communication bus 402, a memory 403, and at least one network interface 404.

The processor 401 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 401 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), generic array logic (generic array logic, GAL), or any combination thereof.

The communication bus 402 is configured to perform information transmission between the foregoing components. The communication bus 402 may be classified into an address bus, a data bus, a control bus, and the like. For ease of representation, only one bold line is for representation in FIG. 4, but this does not mean that there is only one bus or only one type of bus.

The memory 403 is, for example, a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory 403 is not limited thereto. For example, the memory 403 exists independently, and is connected to the processor 401 through the communication bus 402. Alternatively, the memory 403 may be integrated with the processor 401.

Optionally, the memory 403 is configured to store an AID or the like allocated by the device 400 to a STA.

The network interface 404 is configured to communicate with another device or a communication network by using any transceiver-type apparatus. The network interface 404 includes a wired network interface, and may alternatively include a wireless network interface. The wired network interface may be, for example, an Ethernet interface. The Ethernet interface may be an optical interface, an electrical interface, or a combination thereof. The wireless network interface may be a WLAN interface, a cellular network interface, a combination thereof, or the like.

In a specific implementation, in an embodiment, the processor 401 may include one or more CPUs.

In specific implementation, in an embodiment, the device 400 may include a plurality of processors. Each of the processors may be a single-core processor (single-CPU) or may be a multi-core processor (multi-CPU). The processor herein may be one or more devices, circuits, and/or processing cores configured to process data (for example, computer program instructions).

In some embodiments, the memory 403 is configured to store program code 4031 for performing the solutions of this application. The program code 4031 is a computer instruction, and the processor 401 may execute the program code 4031 stored in the memory 403. To be specific, the device 400 may implement, by using the processor 401 and the program code 4031 in the memory 403, a method that is for allocating an AID and that is provided in method embodiments.

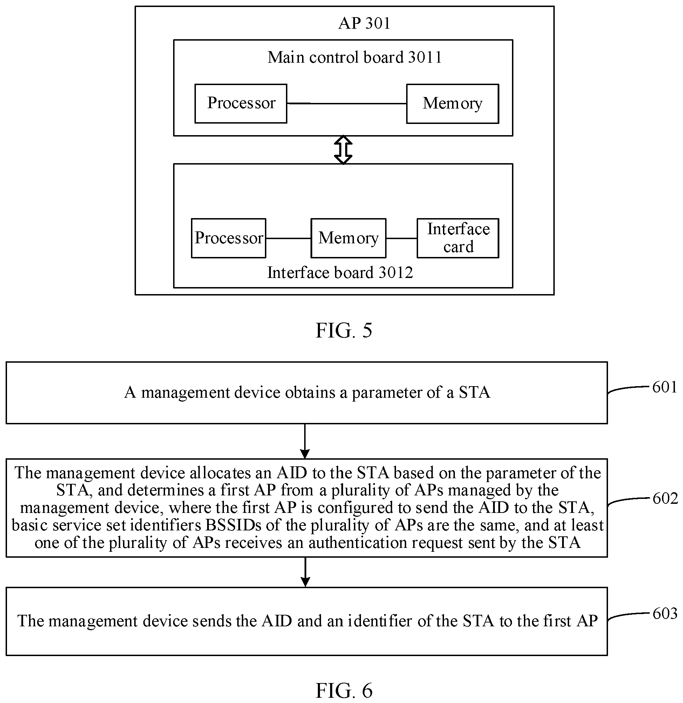

In another implementation, FIG. 5 is a schematic diagram of a structure of an AP 301. The AP 301 includes a main control board 3011 and an interface board 3012. The main control board 3011 is a control plane of the AP 301, and the interface board 3012 is a data plane of the AP 301. The main control board 3011 includes a processor and a memory. The interface board 3012 includes a processor, a memory, and an interface card.

A communication connection is established between the main control board 3011 and the interface board 3012.

The processor of the main control board 3011 may be a CPU, an ASIC, or the like. The processor may include one or more chips. The memory of the main control board 3011 may be a ROM, a static storage device, a dynamic storage device, or a RAM. The memory of the main control board 3011 may store computer instructions. When the computer instructions stored in the memory are executed by the processor, the processor of the main control board 3011 performs a method for allocating an AID.

The processor of the interface board 3012 may be a CPU, an ASIC, or the like. The processor of the interface board 3012 may include one or more chips. The memory of the interface board 3012 may be a ROM, a static storage device, a dynamic storage device, or a RAM. The memory of the interface board 3012 may store computer instructions. When the computer instructions stored in the memory are executed by the processor of the interface board 3012, the processor of the interface board 3012 performs the method for allocating an AID. The interface card can send and receive messages.

The following describes processing of a management device in a procedure of the method for allocating an AID in embodiments of this application. Refer to step 601 to step 603 in FIG. 6. In the following descriptions, an AP is the AP 301, and the management device is the management device 302.

Step 601: The management device obtains a parameter of a STA.

The STA is any device that requests to access the AP, for example, a mobile phone, a tablet, a sound box, or a notebook computer.

In this embodiment, the management device determines that the STA requests authentication, and obtains the parameter of the STA. The parameter includes but is not limited to a capability level, a model, and the like of the STA.

Step 602: The management device allocates an AID to the STA based on the parameter of the STA, and determines a first AP from a plurality of APs managed by the management device, where the first AP is configured to send the AID to the STA, basic service set identifiers BSSIDs of the plurality of APs are the same, and at least one of the plurality of APs receives an authentication request sent by the STA.

In this embodiment, the management device checks the parameter of the STA, and determines whether to allow the STA to go online. For example, the management device determines whether the model of the STA is a model that is allowed to access, and determines whether the capability level of the STA meets a capability level required by the management device. If both the conditions are met, the management device determines to allow the STA to go online. Otherwise, the STA is not allowed to go online. If the STA is allowed to go online, the AID is allocated to the STA. For ease of description, the AID is referred to as a target AID. For example, the management device selects an AID with a smallest sequence number from currently unallocated AIDs. If the STA is not allowed to go online, the management device sends an authentication failure message to an AP that receives the authentication request, so that the AP sends an authentication response message to the STA, where the authentication response message indicates that the authentication fails.

In addition, the management device determines the first AP from the plurality of APs managed by the management device, where the first AP is used as an AP to be associated with the STA, and the first AP is configured to send the target AID to the STA. When the management device is a central AP, if the central AP determines that the central AP is the first AP, step 603 may not be performed.

Optionally, when allocating the AIDs, the management device may allocate the AIDs in ascending order based on an access sequence of the STAs. A range of the AIDs is 1 to 2007. Each AID corresponds to one available marker bit, and the marker bit is set to 1 by default. After the target AID is allocated to the STA, a marker bit of the target AID is set to 0. In this way, when allocating the AID to the STA, the management device allocates an AID whose marker bit is set to 1, so that there is no STA using a same AID at a same moment.

It should be noted that the plurality of APs are APs that the STA may access. In addition, because the selected first AP is used to communicate with the STA, the first AP should be able to communicate with the STA currently. In this case, the first AP is an AP that receives the authentication request sent by the STA.

Step 603: The management device sends the AID and an identifier of the STA to the first AP.

In this embodiment, after determining the target AID and the first AP, the management device sends the target AID and the identifier of the STA to the first AP, where the identifier of the STA may be a MAC address of the STA, or may be another identifier that uniquely indicates the STA.

The following describes processing of an AP in a procedure of the method for allocating an AID in embodiments of this application. Refer to step 701 and step 702. A first AP is used as an example for description in step 701 and step 702. The first AP belongs to a plurality of APs managed by a management device.

Step 701: The first AP receives an AID and an identifier of a STA that are sent by the management device, where the AID is an AID allocated by the management device to the STA.

Step 702: The first AP stores the identifier of the STA and the AID in a corresponding manner.

In this embodiment, the first AP stores the identifier of the STA and a target AID in a corresponding manner, so that when receiving a message including the target AID, the first AP determines that the message is from a STA indicated by the identifier of the STA, and the first AP only needs to include the AID in a message when the message is sent to the STA. In this way, because the AID is generally one or two bytes, and a MAC address is six bytes, compared with carrying the MAC address, carrying the AID can reduce byte overheads of the message.

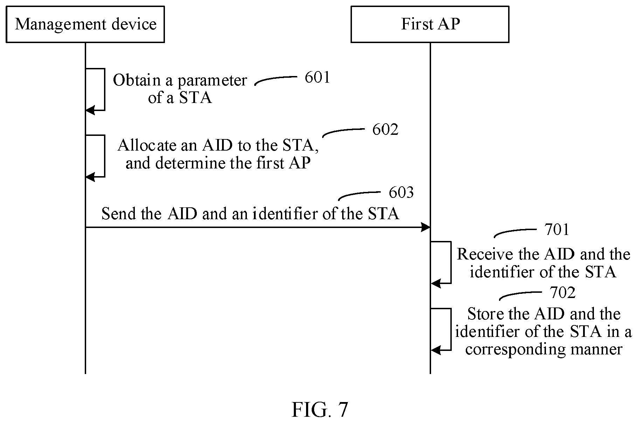

With reference to FIG. 6, step 701, and step 702, for a procedure of interaction between the management device and the first AP, refer to FIG. 7.

Based on the procedure shown in FIG. 7, in a network architecture in which a plurality of APs share one BSSID, the management device uniformly allocates the AID to the STA, so that AIDs allocated to STAs in the network architecture are different. Therefore, when the message is sent, the AID may be carried to identify the STA.

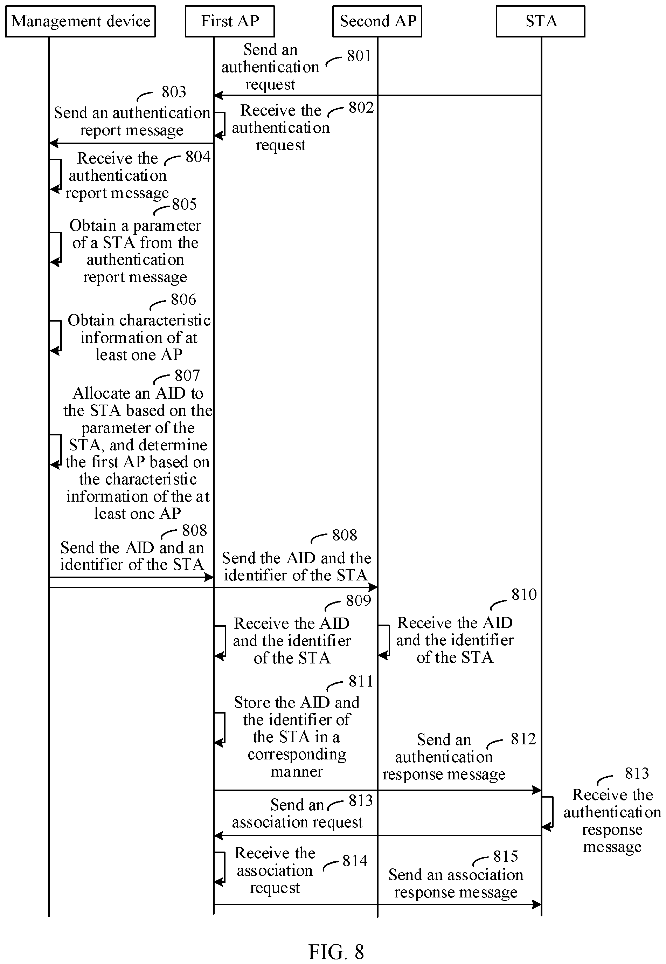

The following describes, from two perspectives of a management device and an AP, a method for allocating an AID. Refer to a procedure shown in FIG. 8.

Step 801: A STA sends an authentication request, where the authentication request includes a parameter of the STA.

In this embodiment, the STA first scans a wireless network, and after the scanning is completed, displays the scanned wireless network on a screen. A user selects to connect to a wireless network whose network architecture (where the network architecture corresponds to one BSSID) includes a plurality of APs. The STA generates the authentication request, where the authentication request includes the parameter of the STA, and the parameter includes but is not limited to a capability level, a model, and the like of the STA. The STA sends the authentication request. This is merely a possible manner to trigger the STA to send the authentication request. This is not limited in this embodiment of this application.

Step 802: A first AP receives the authentication request sent by the STA.

In this embodiment, each AP currently covering the STA can receive the authentication request sent by the STA. Herein, it is assumed that the first AP receives the authentication request sent by the STA.

Step 803: The first AP sends an authentication report message to a management device, where the authentication report message includes the parameter of the STA.

Step 802 and step 803 only show that the first AP receives the authentication request sent by the STA, and sends the authentication report message to the management device. Herein, another AP may also receive the authentication request sent by the STA, and the another AP may also send the authentication report message to the management device.

Step 804: The management device receives an authentication report message sent by at least one of the plurality of APs, where the authentication report message includes the parameter of the STA.

The authentication report message indicates to request to perform an authentication operation for the STA.

In this embodiment, the at least one AP sends the authentication report message to the management device, and the management device receives the authentication report message sent by the at least one AP.

Step 805: The management device obtains the parameter of the STA from the authentication report message.

In this embodiment, a field in the authentication report message is specially used to store the parameter of the STA, and the management device may obtain the parameter of the STA from the field.

Step 806: The management device obtains characteristic information of the at least one AP, where characteristic information of each AP includes at least one of load information, information about encountered interference, and quality information of a received signal sent by the STA.

The at least one AP is an AP that is in the plurality of APs and that receives the authentication request sent by the STA.

In an implementation, when the AP sends the authentication report message to the management device, the authentication report message includes the characteristic information of the AP, where the characteristic information of the AP includes at least one of the load information of the AP, the information about the encountered interference, and the quality information of the received signal sent by the STA. The load information of the AP is a quantity of currently associated STAs or a quantity of remaining STAs that can be associated with the AP. The information about the interference encountered by the AP is a value of interference encountered by the AP from another AP. The quality information of the received signal sent by the STA is signal strength of the authentication request that is sent by the STA and that is received by the AP. The management device may obtain the characteristic information of the AP from the authentication report message.

In another implementation, the authentication report message does not include the characteristic information. The management device may send an obtaining request for the characteristic information to the AP, and the AP reports the characteristic information to the management device.

In another implementation, the authentication report message does not include the characteristic information. For the quality information, the management device may send an obtaining request for the quality information to the AP, and the AP reports, to the management device, the quality information of the received signal sent by the STA. For the load information, the management device may determine a quantity of STAs currently communicating with the AP. For example, when the management device specifies the STA to associate with the AP for the first time, the management device records communication between the AP and the STA. When the STA roams from the AP that the STA currently communicates with to a coverage area of another AP, the management device updates the STA that communicates with the AP. For the information about the encountered interference, the management device obtains latest interference information reported by the AP, and determines the interference information as the information about the encountered interference.

Step 807: The management device allocates a target AID to the STA based on the parameter of the STA. The management device determines, based on the characteristic information of the at least one AP, quality of a connection between the at least one AP and the STA, and determines an AP with highest connection quality in the at least one AP as the first AP.

The at least one AP is the AP that receives the authentication request sent by the STA. Herein, because the selected first AP is used to communicate with the STA, an AP that can currently receive the authentication request sent by the STA should be selected, so that the STA can communicate with the first AP.

In this embodiment, for a process in which the management device allocates the target AID to the STA, refer to the descriptions of step 602. Details are not described herein again.

When there is one type of characteristic information of the at least one AP, for any AP, if content included in characteristic information of the AP is negatively correlated with connection quality, a reciprocal of the content included in the characteristic information is determined as quality of a connection between the AP and the STA. If content included in characteristic information of the AP is positively correlated with connection quality, the content included in the characteristic information is determined as quality of a connection between the AP and the STA. For example, the characteristic information includes the load information, where the load information is a quantity of STAs that communicates with the AP, and a reciprocal of the quantity of STAs is determined as the quality of the connection to the STA.

When there are a plurality of types of characteristic information of the at least one AP, for any AP, weighting is performed on various types of content of the characteristic information to obtain a weighted value, and the weighted value is determined as the connection quality. Herein, during weighting, a reciprocal is taken for content that is negatively correlated with the connection quality, and weighting processing is performed on the content that the reciprocal is taken for. Specifically, weights of various types of content in the characteristic information may be set based on an actual requirement. This is not limited in this embodiment of this application.

After determining the quality of the connection between the AP and the STA, the management device determines the AP with the highest connection quality as the first AP.

It should be noted that the foregoing is merely an example of a manner of determining the connection quality based on the characteristic information. This is not limited in this embodiment of this application.

Step 808: The management device sends the target AID and an identifier of the STA to the first AP, and sends the target AID and the identifier of the STA to another AP than the first AP in the plurality of APs.

In this embodiment, the management device notifies the target AID in a plurality of manners. The following provides two feasible manners.

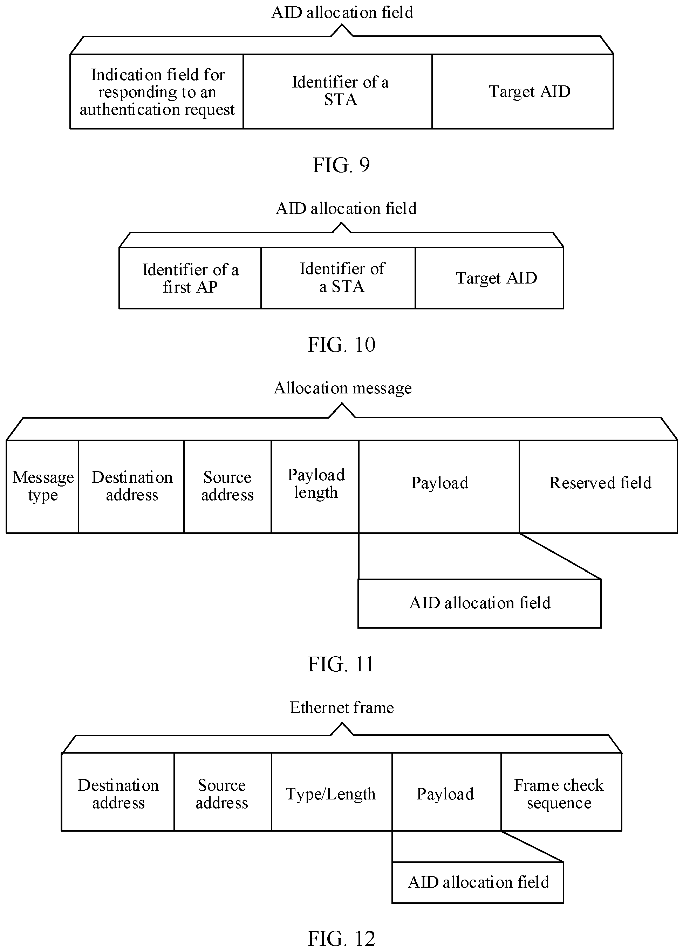

Manner 1: The management device sends an allocation message to each AP. The allocation message includes an AID allocation field, and the AID allocation field includes a field of the identifier of the STA, an AID field, and an indication field for responding to the authentication request. The identifier of the STA may be a MAC address of the STA, and the AID field stores the target AID. Refer to an AID allocation field shown in FIG. 9. In an AID allocation field sent to the first AP, content of the indication field for responding to the authentication request indicates the first AP to send the target AID to the STA. In an AID allocation field sent to the another AP than the first AP in the plurality of APs, content of the indication field for responding to the authentication request indicates not to send the target AID to the STA. For example, in the AID allocation field sent to the first AP, content of the indication field for responding to the authentication request is 1. In the AID allocation field sent to the another AP, content of the indication field for responding to the authentication request is 0.

Manner 2: The management device sends an allocation message to each AP. The allocation message includes an AID allocation field, and the AID allocation field includes a field of an identifier of the AP, a field of the identifier of the STA, and an AID field. The field of the identifier of the AP stores an identifier of the first AP, the identifier of the first AP uniquely indicates the first AP, and the AID field stores the target AID. Refer to an AID allocation field shown in FIG. 10. An AP that receives the AID allocation field determines whether an identifier of the AP is the same as that of the AP in the AID allocation field. If the identifier of the AP is the same as that of the AP in the AID allocation field, it indicates that the AP is the first AP. If the identifier of the AP is different from that of the AP in the AID allocation field, it indicates that the AP is the another AP than the first AP in the plurality of APs.

In the manner 1 and the manner 2, after the management device sends the identifier of the STA and the target AID to the another AP than the first AP in the plurality of APs, the another AP stores the target AID and the identifier of the STA. In this way, when the STA roams from a coverage area of the first AP to a coverage area of the another AP, even if the message carries the target AID but does not carry the identifier of the STA, the another AP can also identify the STA.

Optionally, to distinguish between the allocation message and a recycling message mentioned below, the AID allocation field includes a message identifier, and the message identifier uses different values to respectively identify the allocation message and the recycling message. For example, when the message identifier is 1, a message is the allocation message, and when the message identifier is 0, a message is the recycling message.

It should be noted that the AID allocation fields shown in FIG. 9 and FIG. 10 may be some content of the AID allocation field.

For example, in different network architectures, formats of messages that carry the AID allocation field may be different. For example, the plurality of APs and the management device form an FTTR network architecture, and the management device and each of the plurality of APs are connected through an optical fiber or connected in a wireless manner. The message that carries the AID allocation field may be referred to as the allocation message. Refer to an allocation message shown in FIG. 11. The allocation message includes an AID allocation field, a destination address field, a source address field, a message type field, a payload length field, and a payload field. The payload field may also be referred to as a payload field. For an allocation message sent to any AP, a destination address is an identifier of the AP, the identifier of the AP uniquely indicates the AP, and different APs have different identifiers. The identifier of the AP herein may be any content that can uniquely identify the AP, for example, an index number. For example, a destination address of an allocation message sent to the first AP is an index number of the first AP. A source address is an identifier of the management device, and the identifier of the management device may be a MAC address of the management device, or an index identifier that uniquely identifies the management device. It should be noted that, when the management device is a central AP, because a MAC address of the central AP is the same as that of another AP, the identifier of the management device is not the MAC address. The message type field identifies that the allocation message is a control message rather than a data message.

Optionally, the allocation message further includes a reserved (reserved) field.

The plurality of APs and the management device form an Ethernet architecture, and the management device and each of the plurality of APs are connected through an optical fiber or a cable. A format of the allocation message that carries the AID allocation field is an Ethernet frame. Refer to an Ethernet frame shown in FIG. 12. The AID allocation field is located in a payload field of the Ethernet frame. In the Ethernet frame shown in FIG. 12, if the management device is not a central AP in the network architecture, a source address is a MAC address of the management device, and a destination address is a virtual MAC address of an AP that receives the Ethernet frame. If the management device is a central AP in the network architecture, the source address is a virtual MAC address of the management device, and the destination address is a virtual MAC address of an AP that receives the Ethernet frame. Herein, in a network architecture identified by one BSSID, because a MAC address of each AP is the same, to distinguish between different APs, one virtual MAC address is allocated to each AP to distinguish between the different APs. For example, after each AP goes offline, the management device allocates a different virtual MAC address to each AP. In addition, the virtual MAC address of each AP is invisible to the STA. When the AP communicates with the STA, the MAC address of the AP instead of the virtual MAC address is carried.

In addition, the Ethernet frame further includes a type (type) field, a length (length) field, a frame check sequence (frame check sequence, FCS) field, and the like.

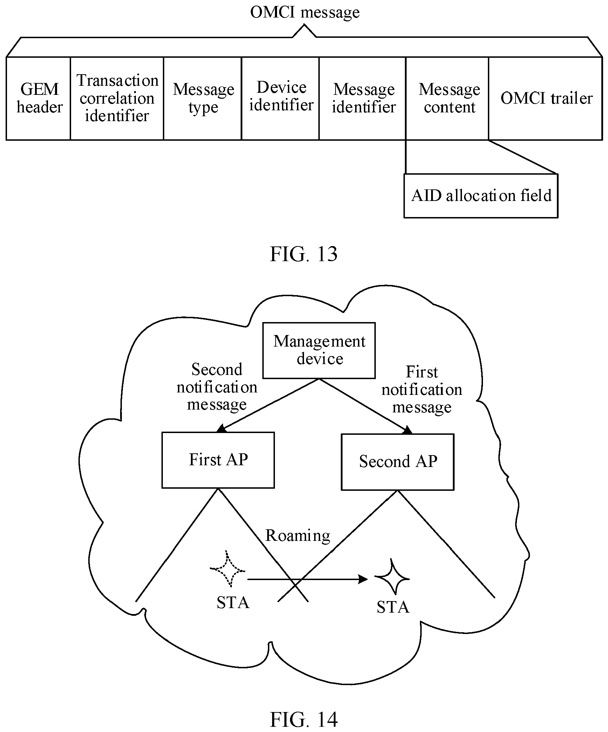

The plurality of APs and the management device form a PON architecture, and the management device and the plurality of APs are connected by using an optical distribution network (optical distribution network, ODN). The format of the allocation message that carries the AID allocation field is a format of an OMCI message. Refer to an OMCI message shown in FIG. 13. The AID allocation field is located in a message content (message content) field of the OMCI message. In the OMCI message shown in FIG. 13, the OMCI message further includes a passive optical access system encapsulation format (gigabit-capable PON encapsulation mode, GEM) header (header) field, a transaction correlation identifier (transaction correlation identifier) field, a message type (message type) field, a device identifier (device identifier) field, a message identifier (message identifier) field, an OMCI trailer (trailer) field, and the like.

The GEM header field includes a GEM payload length, a GEM port identifier, a payload type indicator (payload type indicator, PTI), header error check (header error check, HEC), and the like. Different GEM port identifiers are for identifying different APs. After receiving the OMCI message, the AP may determine an OMCI message that carries a GEM port identifier corresponding to the AP as an OMCI message sent to the AP.

A value of the transaction correlation identifier field needs to be the same in a group of messages including a corresponding request and response. The message type field is for identifying a specific message type. For example, content of the message type field is 0x20. The device identifier field is for identifying an AP type. The message identifier field is for identifying total message types. The message type is one of the total types identified by the message identifier. The OMCI trailer field is used for message check.

Step 809: The first AP receives the target AID and the identifier of the STA that are sent by the management device.

Step 810: The another AP than the first AP receives the target AID and the identifier of the STA that are sent by the management device.

In this embodiment, the another AP than the first AP stores the target AID and the identifier of the STA in a corresponding manner. FIG. 8 shows only that a second AP receives the target AID and the identifier of the STA.

Step 811: The first AP stores the identifier of the STA and the target AID in a corresponding manner.

In this embodiment, the first AP stores the identifier of the STA and the target AID as a correspondence, and records capability information of the STA and the like in the correspondence.

Step 812: When the first AP is an AP that is associated with the STA and that is specified by the management device, the first AP sends an authentication response message to the STA.

In this embodiment, when the first AP receives the target AID and the identifier of the STA, because the first AP is a device that responds to the STA and that is specified by the management device, the first AP sends the authentication response message to the STA.

Step 813: The STA receives the authentication response message, and sends an association request.

In this embodiment, after receiving the authentication response message sent by the first AP, the STA generates the association request. The association request includes but is not limited to a rate, a channel, and a quality of service (quality of service, QoS) capability that are supported by the STA, selected access authentication, a selected encryption algorithm, and the like, and then the STA sends the association request. Herein, because MAC addresses of APs with a same BSSID are the same, the STA sends the association request only to the AP with the MAC address, and each AP covering the STA may receive the association request.

Step 814: The first AP receives the association request sent by the STA.

Step 815: When the first AP is the AP that is associated with the STA and that is specified by the management device, the first AP sends an association response message to the STA, where the association response message includes the target AID.

In this embodiment, the first AP is a device that is associated with the STA and that is specified by the management device. The first AP sends the association response message to the STA, where the association response message includes the target AID.

In addition, the another AP than the first AP may also receive the association request. However, because the another AP is not a device specified to be associated with the STA, the another AP does not return an association response message to the STA.

It should be noted that, when the plurality of APs and the management device form the FTTR network architecture, in step 803, a format of the authentication report message may be the same as a format of the message shown in FIG. 11. When the plurality of APs and the management device form the Ethernet architecture, in step 803, a format of the authentication report message may be the same as a format of the Ethernet frame shown in FIG. 12. When the plurality of APs and the management device form the PON architecture, in step 803, a format of the authentication report message may be the same as a format of the OMCI message shown in FIG. 13.

It should be further noted that, in the procedure shown in FIG. 8, the management device sends the target AID and the identifier of the STA to the second AP. In step 808, the first AP may alternatively send the target AID and the identifier of the STA to the second AP after the first AP completes association with the STA. In addition, when sending the target AID and the identifier of the STA to the second AP, the management device or the first AP may further send content negotiated when the first AP associates with the STA, for example, the rate, the channel, and the QoS capability that are supported by the STA, the selected access authentication, and the selected encryption algorithm. In this way, after the STA roams to a coverage area of the second AP, the second AP may directly communicate with the STA, and provide a packet forwarding function for the STA.

In this embodiment of this application, after the STA moves, an AP that provides forwarding processing for a packet of the STA may be further adjusted. A processing process is as follows:

After the STA is associated with the first AP through the procedure shown in FIG. 8, the first AP is responsible for forwarding the packet (where the packet of the STA includes a packet sent to the STA and a packet received from the STA) of the STA. It is considered that the STA is currently located in the coverage area of the first AP, and the STA may move, so that the STA moves from the coverage area of the first AP to the coverage area of the second AP in the plurality of APs. For example, a company to which the user belongs includes a plurality of office areas. If the user moves from one office area to another office area, a STA of the user may also move from the coverage area of the first AP to the coverage area of the second AP. Refer to FIG. 14. The management device may send a notification message to the second AP. To distinguish the notification message from the following notification message, the notification message is referred to as a first notification message, and the first notification message indicates the second AP to connect to the STA. After receiving the first notification message, the second AP is responsible for forwarding processing after subsequently receiving the packet of the STA. Herein, the second AP already stores the identifier of the STA and the target AID. Therefore, the second AP can distinguish between the STAs based on the AID.

Optionally, the management device may send a second notification message to the first AP, where the second notification message indicates the first AP not to forward the packet of the STA anymore. In this way, when the coverage areas of the first AP and the second AP overlap, also, only one AP is responsible for forwarding the packet of the STA at a same moment.

For example, the first notification message and the second notification message may further carry a same time indication identifier. The time indication identifier indicates the first AP not to forward the packet of the STA anymore after the time, and indicates the second AP to start forwarding the packet of the STA after the time.

For example, processing that the management device determines that the STA enters the coverage area of the second AP is as follows:

Each time after receiving the packet sent by the STA, the AP records signal strength of the received packet, and sends the signal strength and the identifier of the STA to the management device, or sends the signal strength and the target AID to the management device. After receiving the signal strength and the target AID, where signal strength of a packet that is sent by the STA and that is received by the first AP is first strength, and signal strength of a packet that is sent by the STA and that is received by the second AP is second strength, if the first strength is lower than the second strength, the management device determines that the STA roams from the coverage area of the first AP to the coverage area of the second AP. Herein, alternatively, the AP may periodically obtain the signal strength of the received packet sent by the STA, and send the signal strength to the management device.

Optionally, if the first strength is continuously lower than the second strength in a period of time, it is determined that the STA roams from the coverage area of the first AP to the coverage area of the second AP.

It should be noted that the first notification message may carry the identifier of the STA and an identifier indicating to forward the packet, and the second notification message may carry the identifier of the STA and an identifier indicating to stop forwarding the packet.

It should be further noted that, when the STA sends the packet, each AP covering the STA may receive the packet. However, because the management device specifies, at a moment, only one AP to connect to the STA, there is no case in which a plurality of APs simultaneously process the packet of the STA. In addition, MAC addresses of the plurality of APs are the same. Therefore, from a perspective of the STA, the STA considers that the STA always accesses a same wireless network.

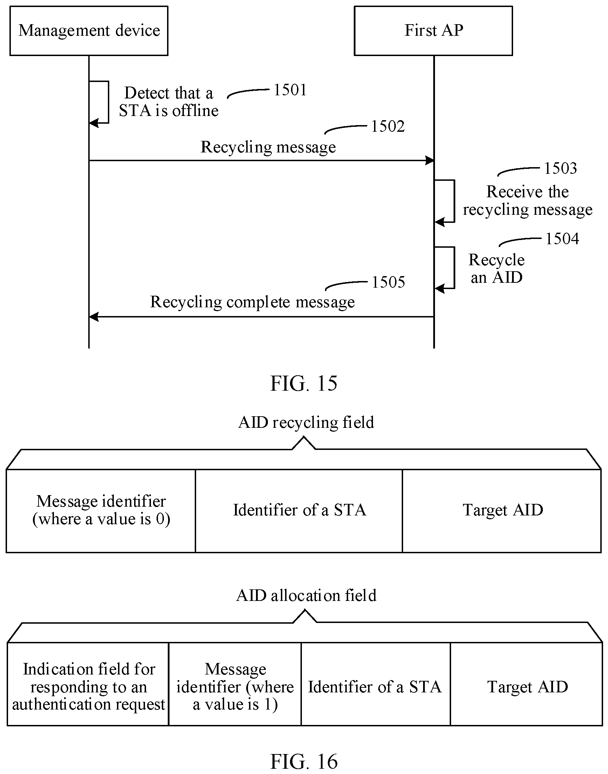

In this embodiment of this application, to enable more STAs to access the wireless network, after the STA goes offline from the wireless network, the AID allocated to the STA is recycled, and the recycled AID may be allocated to another AP that is to access the wireless network. For a recycling processing procedure, refer to step 1501 to step 1505 in FIG. 15.

Step 1501: A management device detects that a STA is offline.

In this embodiment, the management device detects, in a plurality of manners, that the STA is offline, and two feasible manners are provided herein.

Manner 1: Each time after receiving a packet sent by the STA, an AP records signal strength of the received packet, and sends the signal strength and an identifier of the STA to the management device, or sends the signal strength and a target AID to the management device. If the management device does not receive, within first duration, the signal strength of the received packet that is of the STA and that is sent by the AP, the management device determines that the STA is offline. The first duration may be set based on an actual requirement.

Manner 2: An AP associated with the STA detects that the STA is offline, and the AP sends a message indicating that the STA is offline to the management device. After receiving the message, the management device determines that the STA is offline. For example, a manner in which the AP detects that the STA is offline is that the AP actively determines that the STA is offline. For example, after the STA has been associated with the AP, management personnel enter an access blocklist in the AP, and if the STA is in the blocklist, the AP determines that the STA is offline. For another example, the AP associated with the STA periodically sends a management frame to the STA. If the STA does not respond within a target quantity of periods or second duration, the AP determines that the STA is offline. The target quantity and the second duration may be set based on an actual requirement.

Alternatively, in some cases, the STA sends an offline message to the AP, and the AP determines that the STA is offline. For example, if the STA performs wireless network handover, the STA sends the offline message to the AP, and the AP determines that the STA is offline.

The manner 1 and the manner 2 are merely two optional manners. This is not limited in this embodiment of this application.

Step 1502: The management device separately sends a recycling message to a first AP, where the recycling message indicates to recycle the target AID.

In this embodiment, after determining that the STA is offline, the management device generates the recycling message, where the recycling message includes the identifier of the STA or the target AID. The management device sends the recycling message to a plurality of APs.

For example, the recycling message includes an AID recycling field, where the AID recycling field includes an AID field, or the AID recycling field includes an AID field and a field of the identifier of the STA. Alternatively, the AID recycling field includes an AID field, a field of the identifier of the STA, and a message identifier field. The AID field is for storing the target AID. The message identifier indicates whether a message is the recycling message or an allocation message. When a value of the message identifier is 1, the message is the allocation message. When a value of the message identifier is 0, the message is the recycling message. For example, refer to an AID recycling field and an AID allocation field shown in FIG. 16.

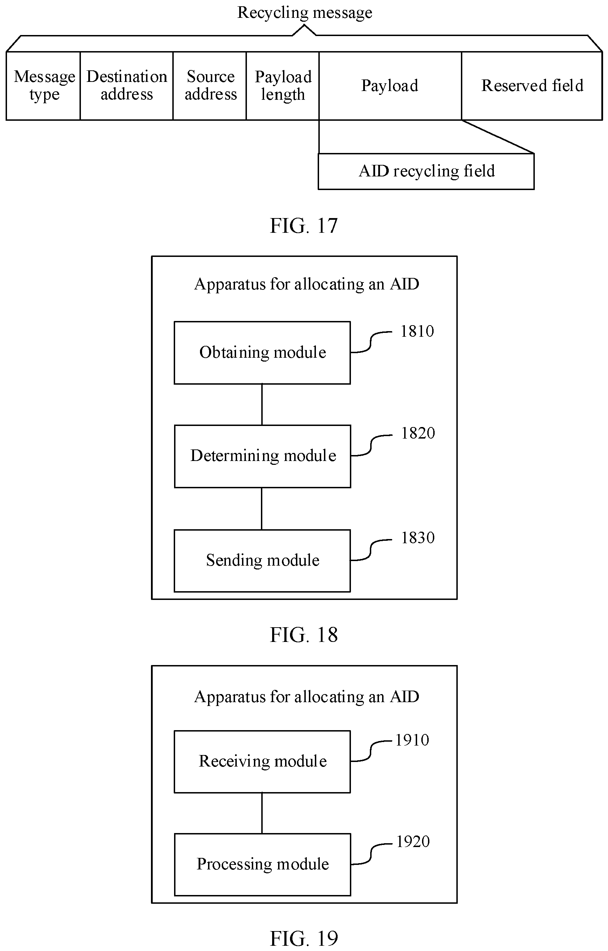

For example, in different network architectures, formats of recycling messages that carry the AID recycling field may be different. For example, the plurality of APs and the management device form an FTTR network architecture, and the management device and each of the plurality of APs are connected through an optical fiber or connected in a wireless manner. Refer to a recycling message shown in FIG. 17. The recycling message includes an AID recycling field, a destination address field, a source address field, a message type field, a payload length field, and a payload field. For a recycling message sent to any AP, a destination address is an identifier of the AP, the identifier of the AP uniquely indicates the AP, and different APs have different identifiers. A source address is an identifier of the management device, and the identifier of the management device may be a MAC address of the management device, or an index identifier that uniquely identifies the management device. The message type field identifies that the recycling message is a control message.

Optionally, the recycling message further includes a reserved field.

For another example, the plurality of APs and the management device form an Ethernet architecture, and the management device and each of the plurality of APs are connected through an optical fiber or a cable. The format of the recycling message that carries the AID recycling field is an Ethernet frame, and the AID recycling field is located in a payload field of the Ethernet frame. For a source address and a destination address, refer to the source address and the destination address of the Ethernet frame shown in FIG. 12.

For another example, the plurality of APs and the management device form a PON architecture, and the management device and the plurality of APs are connected by using an ODN. The format of the recycling message that carries the AID recycling field is a format of an OMCI message, and the AID recycling field is located in a message content field of the OMCI message. Herein, for a structure of the OMCI message, refer to FIG. 13.

Step 1503: The plurality of APs separately receive the recycling message sent by the management device.

Step 1504: The plurality of APs separately recycle the target AID.

In this embodiment, after receiving the recycling message, each of the plurality of APs deletes the target AID. For example, the first AP in the plurality of APs deletes a correspondence between the target AID and the identifier of the STA.

Step 1505: The plurality of APs separately send a recycling complete message to the management device.

In this embodiment, after the AP deletes the target AID, there is no correspondence between the identifier of the STA and the target AID. After the management device receives the recycling complete message sent by each of the plurality of APs, the management device may allocate the target AID to another to-be-accessed STA. In this way, after the STA goes offline, the target AID may alternatively be provided for the another STA for use, thereby improving utilization of the AID.

Optionally, after the target AID is recycled, the management device sets a marker bit of the target AID to 1, indicating that the target AID may be allocated to the another STA.

It should be noted that FIG. 15 shows only that the management device sends the recycling message to the first AP. For processing that the management device sends the recycling message to the another AP, refer to FIG. 15.

In another implementation, the management device sends only the AID and the identifier of the STA to the first AP, and the management device may send only the recycling message to the first AP, so that the first AP deletes the AID.

In another implementation, the management device sends the AID and the identifier of the STA to the plurality of APs managed by the management device, and the management device may send the recycling message to the first AP, so that the first AP deletes the AID, and the first AP sends the recycling message to another AP than the first AP in the plurality of APs, so that the another AP deletes the AID.

In this embodiment of this application, a process in which the management device detects a status of the AP is further provided. Processing is as follows: The management device establishes a heartbeat connection to each AP, and the management device periodically sends a heartbeat message to the AP. If the management device does not receive a heartbeat reply message sent by an AP within consecutive target quantities of periods, the management device determines that the AP is faulty, and may send a prompt message to a device of the management personnel, so that the management personnel perform fault rectification on the AP in time. The target quantity herein may be set based on the actual requirement.

In this embodiment of this application, in the network architecture identified by one BSSID, the management device uniformly allocates the AID, so that different STAs that access the network architecture correspond to different AIDs. In this way, messages that carry the AIDs between the plurality of APs and the STAs are not disordered. In addition, because one AID uniquely corresponds to one STA, the AID may be used to replace the MAC address to identify the STA, thereby reducing byte overheads. For example, the MAC address is 6 bytes, and the byte can be reduced to 1 byte or 2 bytes by using the AID.

The following describes apparatuses provided in embodiments of this application.

FIG. 18 is a structural diagram of an apparatus for allocating an AID according to an embodiment of this application. The apparatus may be implemented as a part or all of the apparatus by using software, hardware, or a combination thereof. The apparatus is used in a management device. The apparatus provided in this embodiment of this application may implement the procedure described in FIG. 6 in embodiments of this application. The apparatus includes an obtaining module 1810, a determining module 1820, and a sending module 1830.

The obtaining module 1810 is configured to obtain a parameter of a STA, and may be specifically configured to: implement an obtaining function in step 601 and perform an implicit step included in step 601.

The determining module 1820 is configured to: allocate an AID to the STA based on the parameter of the STA, and determine a first AP from a plurality of APs managed by the management device, where the first AP is configured to send the AID to the STA, BSSIDs of the plurality of APs are the same, at least one of the plurality of APs receives an authentication request sent by the STA, and the first AP belongs to the at least one AP, and the determining module 1820 may be specifically configured to: implement a determining function in step 602 and perform an implicit step included in step 602.

The sending module 1830 is configured to send the AID and an identifier of the STA to the first AP, and may be specifically configured to: implement a sending function in step 603 and perform an implicit step included in step 603.

In a possible implementation, the sending module 1830 is further configured to:
send the AID and the identifier of the STA to another AP than the first AP in the plurality of APs.

In a possible implementation, the determining module 1820 is further configured to detect that the STA is offline.

The sending module 1830 is further configured to separately send a recycling message to the plurality of APs, where the recycling message indicates to recycle the AID.

In a possible implementation, the plurality of APs and the management device form a fiber to the room FTTR network architecture, the management device includes the AID and the identifier of the STA in an allocation message, the AID and the identifier of the STA are located in a payload field of the allocation message, and a destination address of the allocation message is an identifier of an AP that receives the allocation message.

In a possible implementation, the plurality of APs and the management device form an Ethernet architecture, the management device includes the AID and the identifier of the STA in an Ethernet frame, and the AID and the identifier of the STA are located in a payload field of the Ethernet frame.

In a possible implementation, the plurality of APs and the management device form a PON architecture, the management device includes the AID and the identifier of the STA in an OMCI message, and the AID and the identifier of the STA are located in a message content field of the OMCI message.

In a possible implementation, the obtaining module 1810 is configured to:
receive an authentication report message sent by the at least one of the plurality of APs, where the authentication report message includes the parameter of the STA; and
obtain the parameter of the STA from the authentication report message.

In a possible implementation, the obtaining module 1810 is further configured to obtain characteristic information of the at least one AP, where characteristic information of each AP includes at least one of load information, information about encountered interference, and quality information of a received signal sent by the STA.

The determining module 1820 is configured to: determine, based on the characteristic information of the at least one AP, quality of a connection between the at least one AP and the STA, and determine an AP with highest connection quality in the at least one AP as the first AP.

In a possible implementation, the determining module 1820 is further configured to detect that the STA moves from a coverage area of the first AP to a coverage area of a second AP in the plurality of APs.

The sending module 1830 is further configured to send a notification message to the second AP, where the notification message indicates the second AP to connect to the STA.

FIG. 19 is a structural diagram of an apparatus for allocating an AID according to an embodiment of this application. The apparatus may be implemented as a part or all of the apparatus by using software, hardware, or a combination thereof. The apparatus is used in a first AP. The apparatus provided in this embodiment of this application may implement some processing in the procedure described in FIG. 7 in embodiments of this application. The apparatus includes a receiving module 1910 and a processing module 1920.

The receiving module 1910 is configured to receive an AID and an identifier of a STA that are sent by a management device, where the AID is an AID allocated by the management device to the STA, and the receiving module 1910 may be specifically configured to: implement a receiving function in step 701 and perform an implicit step included in step 701.

The processing module 1920 is configured to store the identifier of the STA and the AID in a corresponding manner, and may be specifically configured to: implement a processing function in step 702 and perform an implicit step included in step 702.

In a possible implementation, the apparatus further includes a sending module, configured to: when the first AP is an AP that is associated with the STA and that is specified by the management device, send the AID to the STA.

In a possible implementation, the receiving module 1910 is further configured to: before receiving the AID and the identifier of the STA that are sent by the management device, receive an authentication request sent by the STA, where the authentication request includes a parameter of the STA.

The apparatus further includes the sending module, configured to: send an authentication report message to the management device, where the authentication report message includes the parameter of the STA; and
after the AID and the identifier of the STA that are sent by the management device are received, when the first AP is the AP that is associated with the STA and that is specified by the management device, send an authentication response message to the STA.

In a possible implementation, the receiving module 1910 is further configured to receive a recycling message sent by the management device, where the recycling message indicates to recycle the AID.

The processing module 1920 is further configured to recycle the AID.

For detailed processes that are shown in FIG. 18 and FIG. 19 and in which the apparatus for allocating an AID allocates the AID, refer to the descriptions in the foregoing embodiments. Details are not described herein again. The apparatus that is for allocating an AID and that is shown in FIG. 18 is the management device 302 in FIG. 3, and the apparatus that is for allocating an AID and that is shown in FIG. 19 is the AP 301 in FIG. 3.

In some embodiments, a computer program product is provided. The computer program product includes computer instructions, where the computer instructions are stored in a computer-readable storage medium. A processor of a management device reads the computer instructions from the computer-readable storage medium, and the processor executes the computer instructions, to enable the management device to perform the procedure shown in FIG. 6.

In some embodiments, a computer program product is provided. The computer program product includes computer instructions, where the computer instructions are stored in a computer-readable storage medium. A processor of a first AP reads the computer instructions from the computer-readable storage medium, and the processor executes the computer instructions, to enable the first AP to perform a part of the procedure shown in FIG. 7.

A person of ordinary skill in the art may be aware that, the method steps and units that are described in combination with embodiments disclosed in this application may be implemented by electronic hardware, computer software, or a combination thereof. To clearly describe the interchangeability between the hardware and the software, the foregoing has generally described steps and compositions of embodiments based on functions. Whether the functions are performed by hardware or software depends on a particular application and a design constraint condition of the technical solutions. A person of ordinary skill in the art may use different methods to implement the described functions for each particular application, but it should not be considered that the implementation goes beyond the scope of this application.

In several embodiments provided in this application, it should be understood that the disclosed system architecture, apparatus, and method may be implemented in another manner. For example, the described apparatus embodiment is merely an example. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the objectives of the solutions of embodiments of this application.

In addition, the modules in embodiments of this application may be integrated into one processing module, or each of the modules may exist alone physically, or two or more modules are integrated into one module. The integrated module may be implemented in a form of hardware, or may be implemented in a form of a software module.

When the integrated module is implemented in a form of a software functional module and sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM, a magnetic disk, or an optical disc.

In this application, terms such as "first" and "second" are used to distinguish between same items or similar items that have basically same functions and purposes. It should be understood that there is no logical or time-sequence dependency between "first" and "second", and a quantity and an execution sequence are not limited. It should be further understood that although the terms such as "first" and "second" are used in the following descriptions to describe various elements, the elements should not be limited by the terms. The terms are merely used to distinguish one element from another element. For example, without departing from the scope of the various examples, the first AP may be referred to as a second AP, and similarly, the second AP may be referred to as a first AP. Both the first AP and the second AP may be APs, and in some cases, may be separate and different APs.

In this application, the term such as "at least one" means one or more, and in this application, the term such as "a plurality of" means two or more.

The foregoing descriptions are merely specific implementations of this application, but are not intended to limit the protection scope of this application. Various equivalent modifications or replacements readily figured out by a person skilled in the art within the technical scope disclosed in this application shall fall within the protection scope of this application. Therefore, the protection scope of this application shall be subject to the protection scope of the claims.

## Claims

1. A method for allocating an association identifier AID, wherein the method comprises:
obtaining, by a management device, a parameter of a station STA;
allocating, by the management device, an AID to the STA based on the parameter of the STA, and determining a first AP from a plurality of access points APs managed by the management device, wherein the first AP is configured to send the AID to the STA, basic service set identifiers BSSIDs of the plurality of APs are the same, at least one of the plurality of APs receives an authentication request sent by the STA, and the first AP belongs to the at least one AP; and
sending, by the management device, the AID and an identifier of the STA to the first AP.

2. The method according to claim 1, wherein the method further comprises:
sending, by the management device, the AID and the identifier of the STA to another AP than the first AP in the plurality of APs.

3. The method according to claim 2, wherein the method further comprises:
detecting, by the management device, that the STA is offline; and
separately sending, by the management device, a recycling message to the plurality of APs, wherein the recycling message indicates to recycle the AID.

4. The method according to any one of claims 1 to 3, wherein the plurality of APs and the management device form a fiber to the room FTTR network architecture, the management device comprises the AID and the identifier of the STA in an allocation message, the AID and the identifier of the STA are located in a payload field of the allocation message, and a destination address of the allocation message is an identifier of an AP that receives the allocation message.

5. The method according to any one of claims 1 to 3, wherein the plurality of APs and the management device form an Ethernet architecture, the management device comprises the AID and the identifier of the STA in an Ethernet frame, and the AID and the identifier of the STA are located in a payload field of the Ethernet frame.

6. The method according to any one of claims 1 to 3, wherein the plurality of APs and the management device form a passive optical network PON architecture, the management device comprises the AID and the identifier of the STA in an optical network unit management and control interface OMCI message, and the AID and the identifier of the STA are located in a message content field of the OMCI message.

7. The method according to any one of claims 1 to 5, wherein the obtaining, by a management device, a parameter of a STA comprises:
receiving, by the management device, an authentication report message sent by the at least one of the plurality of APs, wherein the authentication report message comprises the parameter of the STA; and
obtaining, by the management device, the parameter of the STA from the authentication report message.

8. The method according to any one of claims 1 to 7, wherein the method further comprises:
obtaining, by the management device, characteristic information of the at least one AP, wherein characteristic information of each AP comprises at least one of load information, information about encountered interference, and quality information of a received signal sent by the STA; and
the determining a first AP from a plurality of APs managed by the management device comprises:
determining, by the management device based on the characteristic information of the at least one AP, quality of a connection between the at least one AP and the STA, and determining an AP with highest connection quality in the at least one AP as the first AP.

9. The method according to any one of claims 1 to 8, wherein the method further comprises:
detecting, by the management device, that the STA moves from a coverage area of the first AP to a coverage area of a second AP in the plurality of APs; and
sending, by the management device, a notification message to the second AP, wherein the notification message indicates the second AP to connect to the STA.

10. A method for allocating an association identifier AID, wherein the method comprises:
receiving, by a first access point AP, an AID and an identifier of a station STA that are sent by a management device, wherein the AID is an AID allocated by the management device to the STA; and
storing, by the first AP, the identifier of the STA and the AID in a corresponding manner.

11. The method according to claim 10, wherein the method further comprises:
when the first AP is an AP that is associated with the STA and that is specified by the management device, sending, by the first AP, the AID to the STA.

12. The method according to claim 10 or 11, before the receiving, by a first AP, an AID and an identifier of a STA that are sent by a management device, further comprising:
receiving, by the first AP, an authentication request sent by the STA, wherein the authentication request comprises a parameter of the STA; and
sending, by the first AP, an authentication report message to the management device, wherein the authentication report message comprises the parameter of the STA; and
after the receiving, by a first AP, an AID and an identifier of a STA that are sent by a management device, further comprising:
when the first AP is the AP that is associated with the STA and that is specified by the management device, sending, by the first AP, an authentication response message to the STA.

13. The method according to any one of claims 10 to 12, wherein the method further comprises:
receiving, by the first AP, a recycling message sent by the management device, wherein the recycling message indicates to recycle the AID; and
recycling, by the first AP, the AID.

14. An apparatus for allocating an association identifier AID, wherein the apparatus is used in a management device, and the apparatus comprises:
an obtaining module, configured to obtain a parameter of a station STA;
a determining module, configured to: allocate an AID to the STA based on the parameter of the STA, and determine a first AP from a plurality of access points APs managed by the management device, wherein the first AP is configured to send the AID to the STA, basic service set identifiers BSSIDs of the plurality of APs are the same, at least one of the plurality of APs receives an authentication request sent by the STA, and the first AP belongs to the at least one AP; and
a sending module, configured to send the AID and an identifier of the STA to the first AP.

15. The apparatus according to claim 14, wherein the sending module is further configured to:
send the AID and the identifier of the STA to another AP than the first AP in the plurality of APs.

16. The apparatus according to claim 15, wherein the determining module is further configured to detect that the STA is offline; and
the sending module is further configured to separately send a recycling message to the plurality of APs, wherein the recycling message indicates to recycle the AID.

17. The apparatus according to any one of claims 14 to 16, wherein the plurality of APs and the management device form a fiber to the room FTTR network architecture, the management device comprises the AID and the identifier of the STA in an allocation message, the AID and the identifier of the STA are located in a payload field of the allocation message, and a destination address of the allocation message is an identifier of an AP that receives the allocation message.

18. The apparatus according to any one of claims 14 to 16, wherein the plurality of APs and the management device form an Ethernet architecture, the management device comprises the AID and the identifier of the STA in an Ethernet frame, and the AID and the identifier of the STA are located in a payload field of the Ethernet frame.

19. The apparatus according to any one of claims 14 to 16, wherein the plurality of APs and the management device form a passive optical network PON architecture, the management device comprises the AID and the identifier of the STA in an optical network unit management and control interface OMCI message, and the AID and the identifier of the STA are located in a message content field of the OMCI message.

20. The apparatus according to any one of claims 14 to 19, wherein the obtaining module is configured to:
receive an authentication report message sent by the at least one of the plurality of APs, wherein the authentication report message comprises the parameter of the STA; and
obtain the parameter of the STA from the authentication report message.

21. The apparatus according to any one of claims 14 to 20, wherein the obtaining module is further configured to obtain characteristic information of the at least one AP, wherein characteristic information of each AP comprises at least one of load information, information about encountered interference, and quality information of a received signal sent by the STA; and
the determining module is configured to: determine, based on the characteristic information of the at least one AP, quality of a connection between the at least one AP and the STA, and determine an AP with highest connection quality in the at least one AP as the first AP.

22. The apparatus according to any one of claims 14 to 21, wherein the determining module is further configured to detect that the STA moves from a coverage area of the first AP to a coverage area of a second AP in the plurality of APs; and
the sending module is further configured to send a notification message to the second AP, wherein the notification message indicates the second AP to connect to the STA.

23. An apparatus for allocating an association identifier AID, wherein the apparatus is used in a first access point AP, and the apparatus comprises:
a receiving module, configured to receive an AID and an identifier of a station STA that are sent by a management device, wherein the AID is an AID allocated by the management device to the STA; and
a processing module, configured to store the identifier of the STA and the AID in a corresponding manner.

24. The apparatus according to claim 23, wherein the apparatus further comprises a sending module, configured to: when the first AP is an AP that is associated with the STA and that is specified by the management device, send the AID to the STA.

25. The apparatus according to claim 23 or 24, wherein the receiving module is further configured to receive a recycling message sent by the management device, wherein the recycling message indicates to recycle the AID; and
the processing module is further configured to recycle the AID.

26. A system for allocating an AID, wherein the system comprises a management device and an access point AP;
the management device is configured to perform the method according to any one of claims 1 to 9; and
the AP is configured to perform the method according to any one of claims 10 to 13.
